# EUROPEAN PATENT SPECIFICATION

(11) **EP 4 070 523 B1**
(45) Date of publication and mention of the grant of the patent: **17.04.2024**
(21) Application number: 20821385.0
(22) Date of filing: 01.12.2020
(51) Int. Cl.: H04L 65/1016, H04L 65/1073

(54) **INTERWORKING BETWEEN A STAND-ALONE NON-PUBLIC NETWORK (NPN) AND AN INTERNET PROTOCOL MULTIMEDIA SUBSYSTEM (IMS)**
ZUSAMMENARBEITENDES EIGENSTÄNDIGES NICHTÖFFENTLICHES NETZWERK-IMS
INTERFONCTIONNEMENT DE RÉSEAUX NON PUBLICS-IMS AUTONOMES

(30) Priority: 06.12.2019 US 201962944598 P; 20.12.2019 US 201962951216 P
(43) Date of publication of application: 12.10.2022
(73) Proprietor: Telefonaktiebolaget LM Ericsson (publ), 164 83 Stockholm (SE)
(72) Inventor: FOTI, George, Québec H9G 2Z8 (CA)
(74) Representative: Ericsson
(86) International application number: PCT/IB2020/061334
(87) International publication number: WO 2021/111302

(56) References cited:
- EP-A1- 2 583 428
- US-A1- 2012 219 127
- US-A1- 2015 071 291
- ERICSSON: "Solution for providing IMS voice and emergency services for SNPN subscribers using wild card IMPUs", 3GPP DRAFT; S2-2000170, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, Korea; 20200113 - 20200117 7 January 2020 (2020-01-07), XP051842274, Retrieved from the Internet: URL:https://ftp.3gpp.org/tsg_sa/WG2_Arch/T SGS2_136AH_Incheon/Docs/S2-2000170.zip S2-2000170_IMSsolution2_VirtualPBX.doc [retrieved on 2020-01-07]
- "IMS Identification and IMS Identification and IMS Identification and IMS Identification and numbering numbering numbering numbering Leliwa Technical Bulletin", , 23 September 2009 (2009-09-23), pages 1-23, XP055221168, Retrieved from the Internet: URL:http://www.leliwa.com/downloads/ims_id entification_and_numbering.pdf [retrieved on 2015-10-15]

## Description

### TECHNICAL FIELD

The present disclosure relates to wireless communication and in particular, to methods and apparatuses for interworking stand-alone non-public network (NPN) - Internet Protocol (IP) Multimedia Subsystem (IMS).

### BACKGROUND

The IP Multimedia Subsystem (hereinafter IMS) enables operators of a Public Land Mobile Network (hereinafter PLMN) to provide their subscribers with multimedia services based and built on Internet applications, services and protocols. Different services and applications can be offered on top of IMS.

Stand-alone non-public networks (NPNs) using Third Generation Partnership Project (3GPP) Fifth Generation (5G, also called New Radio (NR)) technology will be widely deployed. These networks can integrate with public 5G networks in more than one way as defined, for example, in 3GPP Technical Specification (TS) 23.501. How to enable users in NPNs to be able to fully utilize IMS services is still to be considered.

One choice may be to allocate for each user a profile in the IMS domain, and provision for every NPN user the IMS credentials in such user's device (e.g., NPN user equipment/NPN UE) and setup the subscription in a Home Subscriber Server (HSS) for every NPN user. However, this may require multiple Universal Subscriber Identity Module (USIMs) in the device, and may complicate the handling of identities, as every NPN user may have multiple identities, one for the NPN, and the other for IMS. Not to mention the provisioning of IMS credentials. Existing solutions are lacking.

US 2015/071291 A1 discloses a method and apparatus for handling a Session Initiation Protocol communication in an IMS network.

US 2012/219127 A1 discloses a method and system adapted to provide telephony services to aggregate endpoints on an IMS network.

EP 2 583 428 A1 discloses methods and apparatus for handling public identities in an IMS network.

### SUMMARY

The present invention is defined by the subject-matter of independent claims 1, 2, 14 and 15. Further details are defined in the dependent claims.

Some embodiments advantageously provide solutions for interworking standalone NPN-IMS technologies.

In one embodiment, a method implemented in a proxy-call session control function (P-CSCF) node includes receiving, from an non-public network (NPN) user equipment (UE), an Internet Protocol (IP) Multimedia Subsystem (IMS) registration request, the IMS registration request including an NPN identifier associated to the NPN UE, wherein the IMS registration request is for an individual IMS registration of the NPN UE (10) and the individual IMS registration of the NPN UE is separate from an IMS registration of a wildcarded IMS Public User Identity, IMPU, for an NPN domain; and responsive to the IMS registration request, at least one of obtaining and using an IMS identifier associated to the NPN identifier of the NPN UE to register the NPN UE in an IMS network.

According to an aspect of the present disclosure, a method implemented in a proxy-call session control function, P-CSCF, node is provided. The method includes receiving, from a non-public network, NPN, user equipment, UE, an Internet Protocol, IP, Multimedia Subsystem, IMS, registration request, the IMS registration request including an NPN identifier associated with the NPN UE, wherein the IMS registration request being for an individual IMS registration of the NPN UE (10), and the individual IMS registration of the NPN UE is separate from an IMS registration of a wildcarded IMS Public User Identity, IMPU, for an NPN domain; and as a result of receipt of the IMS registration request, at least one of obtaining and using an IMS identifier associated with the NPN identifier of the NPN UE to register the NPN UE in an IMS network.

According to another aspect of the present disclosure, a proxy-call session control function, P-CSCF, node is provided. The P-CSCF node comprises processing circuitry. The processing circuitry is configured to cause the P-CSCF node to receive, from a non-public network, NPN, user equipment, UE, an Internet Protocol, IP, Multimedia Subsystem, IMS, registration request, the IMS registration request including an NPN identifier associated with the NPN UE; and as a result of receipt of the IMS registration request, at least one of obtain and use an IMS identifier associated with the NPN identifier of the NPN UE to register the NPN UE in an IMS network.

In some embodiments of this aspect, the processing circuitry is further configured to cause the P-CSCF node to obtain the IMS identifier associated with the NPN identifier of the NPN UE by being configured to cause the P-CSCF node to allocate the IMS identifier associated with the NPN and associate the allocated IMS identifier to the NPN identifier of the NPN UE. In some embodiments of this aspect, the processing circuitry is further configured to cause the P-CSCF node to obtain the IMS identifier associated with the NPN identifier of the NPN UE by being configured to cause the P-CSCF node to fetch the IMS identifier that is associated with the NPN identifier of the NPN UE. In some embodiments of this aspect, the processing circuitry is further configured to cause the P-CSCF node to obtain the IMS identifier associated with the NPN identifier of the NPN UE by being configured to cause the P-CSCF node to obtain a manually configured IMS identifier associated with the NPN UE and associate the manually configured IMS identifier to the NPN identifier of the NPN UE.

In some embodiments of this aspect, the processing circuitry is configured to cause the P-CSCF node to use the IMS identifier associated with the NPN identifier of the NPN UE to register the NPN UE in the IMS network by being configured to cause the P-CSCF node to include the IMS identifier in the IMS registration request and forward the IMS registration request toward a serving-call session control function, S-CSCF, node for IMS registration of the NPN UE. In some embodiments of this aspect, the IMS identifier comprises at least one of a Tel-uniform resource indicator, Tel-URI, comprising a telephone number; a Session Initiation Protocol, SIP, URI comprising a telephone number; an IMS Public User Identity, IMPU; one of an allocated IMS identifier and a manually configured IMS identifier; and a free individual identity allocated from a wildcarded identity of the NPN domain.

In some embodiments of this aspect, the NPN identifier of the NPN UE comprises a Session Initiation Protocol, SIP, uniform resource indicator, URI. In some embodiments of this aspect, the processing circuitry is configured to cause the P-CSCF node to use the IMS identifier associated with the NPN identifier of the NPN UE to register the NPN UE in the IMS network by being configured to cause the P-CSCF node to include the IMS identifier in a SIP header in at least one of the IMS registration request; and/or a SIP INVITE message. In some embodiments of this aspect, the processing circuitry is further configured to cause the P-CSCF node to replace, in a SIP INVITE message, at least one field including the NPN identifier with the IMS identifier; and include in a SIP INVITE message the NPN identifier in an originating identity header.

In some embodiments of this aspect, the processing circuitry is further configured to cause the P-CSCF node to replace, in a SIP INVITE message, at least one field including the IMS identifier with the NPN identifier. In some embodiments of this aspect, the processing circuitry is further configured to cause the P-CSCF node to: as a result of the IMS registration request, associate the IMS identifier and the corresponding NPN identifier of the NPN UE to a wildcarded identity allocated to the NPN domain. In some embodiments of this aspect, the IMS registration request is for an individual IMS registration of the UE; and the individual IMS registration of the UE is separate from an IMS registration of a wildcarded IMS Public User Identity, IMPU, for the NPN domain.

According to another aspect of the present disclosure, a non-public network, NPN, user equipment, UE, is provided. The NPN UE comprises processing circuitry. The processing circuitry is configured to cause the NPN UE to at least one of: send, to a proxy-call session control function, P-CSCF, node, an Internet Protocol, IP, Multimedia Subsystem, IMS, registration request, the IMS registration request including an NPN identifier associated with the NPN UE and the IMS registration request being for an individual IMS registration of the UE, wherein the individual IMS registration of the NPN UE (10) is separate from an IMS registration of a wildcarded IMS Public User Identity, IMPU, for an NPN domain; and as a result of the registration request, receive an Internet Protocol, IP, Multimedia Subsystem, IMS, identifier, from the P-CSCF node, the IMS identifier being associated with an NPN identifier of the NPN UE.

In some embodiments of this aspect, the processing circuitry is further configured to cause the NPN UE to send a second IMS registration request, the second IMS registration request including the IMS identifier in a session initiation protocol, SIP, header. In some embodiments of this aspect, the processing circuitry is further configured to cause the NPN UE to receive a session initiation protocol, SIP, INVITE message, the SIP INVITE message comprising an originating identity header indicating the NPN identifier. In some embodiments of this aspect, the individual IMS registration of the UE is separate from an IMS registration of a wildcarded IMS Public User Identity, IMPU, for the NPN domain. In some embodiments of this aspect, the IMS identifier comprises one of an allocated IMS identifier and a manually configured IMS identifier.

According to yet another aspect of the present disclosure, a network node is provided. The network node comprises processing circuitry. The processing circuitry is configured to cause the network node to receive, from a proxy-call session control function, P-CSCD, node, an Internet Protocol, IP, Multimedia Subsystem, IMS, registration request for a non-public network, NPN, user equipment, UE, the IMS registration request comprising an IMS identifier, the IMS identifier being associated with an NPN identifier of the NPN UE, wherein the IMS registration request is for an individual IMS registration of the NPN UE (10), and the individual IMS registration of the NPN UE (10) is separate from an IMS registration of a wildcarded IMS Public User Identity, IMPU, for an NPN domain; and store the IMS identifier in a registration record associated with the NPN identifier of the NPN UE.

In some embodiments of this aspect, the network node is a serving-call session control function, S-CSCF, node. In some embodiments of this aspect, the processing circuitry is further configured to cause the network node to associate the registration record to a wildcarded registration record for the NPN domain. In some embodiments of this aspect, at least one of: the IMS registration request is for an individual IMS registration of the NPN UE; and the individual IMS registration of the NPN UE is separate from an IMS registration of a wildcarded IMS Public User Identity, IMPU, for the NPN domain. In some embodiments of this aspect, the IMS identifier is one of an allocated IMS identifier and a manually configured IMS identifier.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 illustrates an example conceptual arrangement of interworking between IMS and multiple NPNs;
FIG. 2 illustrates an example system architecture according to some embodiments of the present disclosure;
FIG. 3 illustrates yet another example system architecture and example hardware arrangements for devices in the system, according to some embodiments of the present disclosure;
FIG. 4 is a flowchart of an exemplary process in a UE according to some embodiments of the present disclosure;
FIG. 5 is a flowchart of an exemplary process in a proxy-call session control function (P-CSCF) node according to some embodiments of the present disclosure;
FIG. 6 is a flowchart of an exemplary process in a network node according to some embodiments of the present disclosure;
FIG. 7 is a flowchart of an exemplary process in a UE according to some embodiments of the present disclosure;
FIG. 8 is a flowchart of an exemplary process in a proxy-call session control function (P-CSCF) node according to some embodiments of the present disclosure;
FIG. 9 is a flowchart of an exemplary process in a network node according to some embodiments of the present disclosure;
FIG. 10 is a call flow diagram that illustrates an example of when an NPN UE registers for the first time to acquire an IMS identity according to some embodiments of the present disclosure;
FIG. 11 is a call flow diagram that illustrates an example of a subsequent IMS registration when an NPN UE has already acquired an IMS identity according to some embodiments of the present disclosure;
FIG. 12 is a call flow diagram that illustrates an example of when an NPN UE originates an IMS session according to some embodiments of the present disclosure; and
FIG. 13 is a call flow diagram that illustrates an example of when an NPN UE is called with the allocated IMS according to some embodiments of the present disclosure.

### DETAILED DESCRIPTION

Some embodiments of the present disclosure propose a solution where the IMS provider supports a virtual private branch exchange (PBX) solution that enables NPN users to use an IMS without provisioning any information in the NPN UE device.

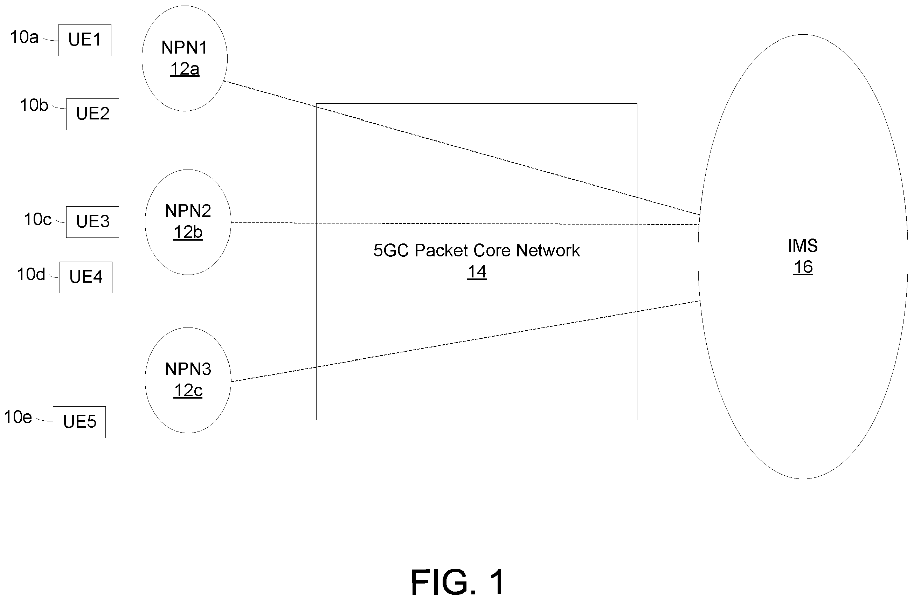

FIG. 1 illustrates an example network architecture including users (e.g., UE1 10a - UE5 10e) connected to NPNs 12 (e.g., NPN1 12a - NPN3 12c), the 5G Core (5GC) Packet Core Network 14, and to the IMS 16. FIG. 1 illustrates a conceptual interworking between an IMS 16 and multiple NPNs 12. In FIG. 1, the IMS operator has agreements with NPN1 12a, NPN2 12b, and NPN3 12c to enable their users (e.g., UE1 10a - UE5 10e) to use an IMS 16 for originating and receiving calls. The interworking between the NPN UE (e.g., UE1 10a - UE5 10e) with the public PLMNs for the purpose of establishing an IMS PDN connection may be what is described in, for example 3GPP Technical Specification (TS) 23.501 Annex D.

In some embodiments, every NPN user/subscriber will be allocated an IMS IP Multimedia Public Identity (IMPU) allocated to the user by IMS (e.g., P-CSCF nodes may allocate an IMS identity such as IMS IMPU). The P-CSCF node may allocate this IMS identity from e.g., a wild carded IMPU. The allocated IMPU may be a routable Tel-URI (Tel Uniform Resource Identifier) that can be used by callers that want to reach the NPN subscriber. The NPN subscriber acquires this Tel-URI at initial IMS registration in a SIP header. In some embodiments, this header may be a new SIP header.

In order to allow an NPN user to continue to use the allocated IMS identity at initial IMS registration, when the NPN user deregisters from IMS and re-registers again, the P-CSCF node permanently stores a mapping between the NPN UE identity and the allocated IMS identity, which may be accessible by, e.g., the P-CSCF node, even after the NPN UE de-registers from IMS.

NPN users may use their own NPN identity for initiating an IMS session, and for registering in an IMS. An NPN user can ignore the allocated Tel-URI if no one will have to reach him for an IMS session. This NPN identity can be a 5G core (5GC) identity as well, such as, for example, a Generic Public Subscription Identifier (GPSI).

To reach an NPN UE 10 for an IMS session, the caller may acquire the NPN UE Tel-URI that was allocated to the NPN UE 10 at initial IMS registration. This can be achieved, for example, by offline means (e.g., NPN subscriber provides the Tel-URI to the caller offline) or by the NPN UE 10 placing an IMS session to the potential caller so that the caller can receive the Tel-URI in the caller id information which can then be used to call the NPN UE 10.

In some embodiments, two new session initiation protocol (SIP) headers are proposed to carry the allocated IMS identity, and an originating identity, described in more detail below. In some embodiments, it may also be possible to use new parameters in *existing* SIP headers to convey the same information.

Some embodiments of the present disclosure describe at least two scenarios. In a first scenario a single P-CSCF node is dedicated for a single NPN. In a second scenario any number of P-CSCFs can handle a single NPN. The second scenario may introduce additional complexities that can be addressed. A single P-CSCF node may be configured to handle more than a single NPN.

The P-CSCF node may register the wildcarded IMPU associated with the NPN using existing procedures defined in e.g., 3GPP TS 23.228.

When multiple P-CSCF nodes are used, each P-CSCF node may register the wildcarded IMPU associated with the NPN using existing procedures defined in, e.g., 3GPP TS 23.228. In order to avoid collision for allocating individual IMPUs (Tel-URIs) to NPN subscribers from the wild carded IMPU used by all P-CSCF nodes, the P-CSCF node may be configured with information to avoid collisions. For example, each P-CSCF node can be configured with the starting and the last IMPU in the wild card series that it can allocate. Other options can be also envisaged as long as they are configured to provide collision avoidance.

A single S-CSCF may serve a wild card series as defined in, for example, 3GPP TS 23.282.

Some embodiments of the present disclosure provide for an efficient arrangement for allowing NPN users to use the IMS network with minor changes to the impacted nodes and/or without requiring anything specific from NPNs and/or without any provisioning of IMS credentials in any NPN UE device.

Before describing in detail exemplary embodiments, it is noted that the embodiments reside primarily in combinations of apparatus components and processing steps related to interworking standalone NPN-IMS. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

In some embodiments, the non-limiting terms wireless device (WD) or a user equipment (UE) are used interchangeably. The UE herein can be any type of wireless device capable of communicating with a network node or another UE over radio signals. In some embodiments, the UE may be an NPN UE. The UE herein can by any type of communication device capable of communicating with another UE, an application server, a network node, a server, an IMS network function (NF) or other IMS network node, via a wired connection and/or a wireless connection. The UE may also be a radio communication device, target device, device to device (D2D) UE, machine type UE or UE capable of machine to machine communication (M2M), low-cost and/or low-complexity UE, a sensor equipped with UE, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

In some embodiments, the term "node" is used herein and can be any kind of network node, such as, a P-CSCF node, an S-CSCF node and/or an I-CSCF node. In some embodiments, the "node" can be any IMS node, etc. In some embodiments, the "node" can be another node, such as a network node outside of IMS, that may, for example, be a network node (e.g., subscriber database node/UDM/HSS, application server/MTAS, etc.) supporting one or more of the arrangements disclosed herein.

A node may include physical components, such as processors, allocated processing elements, or other computing hardware, computer memory, communication interfaces, and other supporting computing hardware. The node may use dedicated physical components, or the node may be allocated use of the physical components of another device, such as a computing device or resources of a datacenter, in which case the node is said to be virtualized. A node may be associated with multiple physical components that may be located either in one location, or may be distributed across multiple locations.

In some embodiments, the term "storing" is used and may indicate storing information (e.g., an IMS identifier associated to an NPN identifier of an NPN UE) in a permanent manner such as, a database, to be used in the future for other IMS registrations and/or other IMS sessions. In some embodiments, the term "storing" may indicate storing information for a current UE IMS registration and/or subscription.

In some embodiments, the term "obtaining" is used and may indicate obtaining existing information (e.g., allocated IMS identifier or a manually configured IMS identifier) from local memory of the device or allocating new information (e.g., allocating a new IMS identifier), or may indicate obtaining information from an external device, such as, an external database.

In some embodiments, the term "IMS identity" or "IMS identifier" is used interchangeably and may indicate one or more of, for example, an IMS private identity (IMPI), IMS public identity (IMPU), a public service identity (PSI) and/or a mobile subscriber integrated services digital network (MSISDN).

In some embodiments, the term "NPN identity" is used and may indicate one or more of, for example, a globally unique subscriber permanent identifier (SUPI) (e.g., international mobile subscriber identity (IMSI) or network access identifier (NAI)-based) and/or a generic public subscriber identifier (GPSI).

In some embodiments, the "wild carded identity" described herein may be considered similar to or the same as the IMS wild carded identity as defined in 3GPP Technical Specification (TS) 23.228 (Wildcarded Public User Identity).

Any two or more embodiments described in this disclosure may be combined in any way with each other.

Note also that some embodiments of the present disclosure may be supported by standard documents disclosed in Third Generation Partnership Project (3GPP) technical specifications. That is, some embodiments of the description can be supported by the above documents. In addition, all the terms disclosed in the present document may be described by the above standard documents.

Note that although terminology from one particular wireless system, such as, for example, 3^{rd} Generation Partnership Project (3GPP), Long Term Evolution (LTE), 5^{th} Generation (5G) (also known as New Radio (NR)), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a UE 10 or a P-CSCF node or any network node may be distributed over a plurality of UEs 10 or a plurality of P-CSCF nodes or a plurality of network nodes. In other words, it is contemplated that the functions of the UE 10, P-CSCF node or network node described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

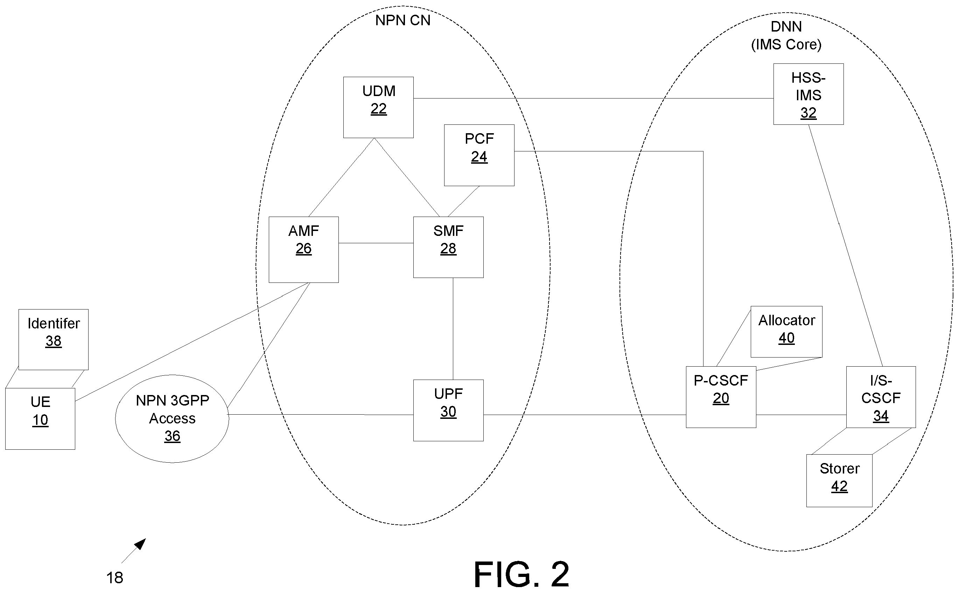

Referring again to the drawing figures, in which like elements are referred to by like reference numerals, there is shown in FIG. 2 a schematic diagram of a communication system 18, according to another embodiment, constructed in accordance with the principles of the present disclosure. The communication system 18 in FIG. 2 is a non-limiting example and other embodiments of the present disclosure may be implemented by one or more other systems and/or networks. Referring to FIG. 2, the system 18 includes a UE 10 and a P-CSCF node 20. The P-CSCF node 20 may be a proxy for the UE 10 to connect to IMS and/or communicate with another device via the IMS. The NPN core network (CN) includes a unified data management (UDM) node 22, a policy control function (PCF) node 24, an access management function (AMF) node 26, a session management function (SMF) node 28 and a user plane function (UPF) node 30. The Data Network Name (DNN) which is an IMS core includes a home subscriber server (HSS)-IMS node 32, the P-CSCF node 20 and an interrogating/serving call session control function (I/S-CSCF) node 34. The system 18 may further include NPN 3GPP Access 36.

As can be seen in this case in this particular example system 18, the HSS 32 is owned by one domain (the IMS operator), while the 5^{th} Generation Core (5GC) is owned by another domain (the SGC operator). Interworking between the HSS 32 and UDM 22 may be via the System Based Architecture (SBA) interface which is already defined by 3GPP. The Rx/N5 interface is across the different domains, which may require tight security between these two interfaces, not currently the case (as they are intra-domain) and business agreements should be in place.

The SGC may be configured with information to enable connectivity to the IMS (e.g., enable an IMS Protocol Data Unit (PDU) connection to be established). Additionally, the P-CSCF nodes 20 that are deployed in the IMS core can be additionally configured with the IP-range of IP addresses, as an additional check, and/or also the user plane function (UPF) addresses, carrying UE traffic, belonging to the NPN UE 10 that the P-CSCFs 20 will communicate with as an additional measure of security with this option. This may not be used in some embodiments if, for example, the IMS domain is owned by the NPN operator.

In some embodiments, UE 10 may include identifier 38 which is configured to cause the UE 10 to send an Internet Protocol, IP, Multimedia Subsystem, IMS, registration request, the IMS registration request including an NPN identifier associated with the NPN UE and the IMS registration request being for an individual IMS registration of the UE; and as a result of the registration request, receive an Internet Protocol, IP, Multimedia Subsystem, IMS, identifier, the IMS identifier being associated with an NPN identifier of the NPN UE.

In some embodiments, P-CSCF node 20 includes allocator 40 which is configured to cause the P-CSCF node 20 to receive, from a non-public network, NPN, user equipment, UE, an Internet Protocol, IP, Multimedia Subsystem, IMS, registration request, the IMS registration request including an NPN identifier associated with the NPN UE; and as a result of receipt of the IMS registration request, at least one of obtain and use an IMS identifier associated with the NPN identifier of the NPN UE to register the NPN UE in an IMS network.

In some embodiments, S-CSCF node 34 includes storer 42 which is configured to cause the S-CSCF node 34 to receive an Internet Protocol, IP, Multimedia Subsystem, IMS, registration request for a non-public network, NPN, user equipment, UE, the IMS registration request comprising an IMS identifier, the IMS identifier being associated with an NPN identifier of the NPN UE; and store the IMS identifier in a registration record associated with the NPN identifier of the NPN UE.

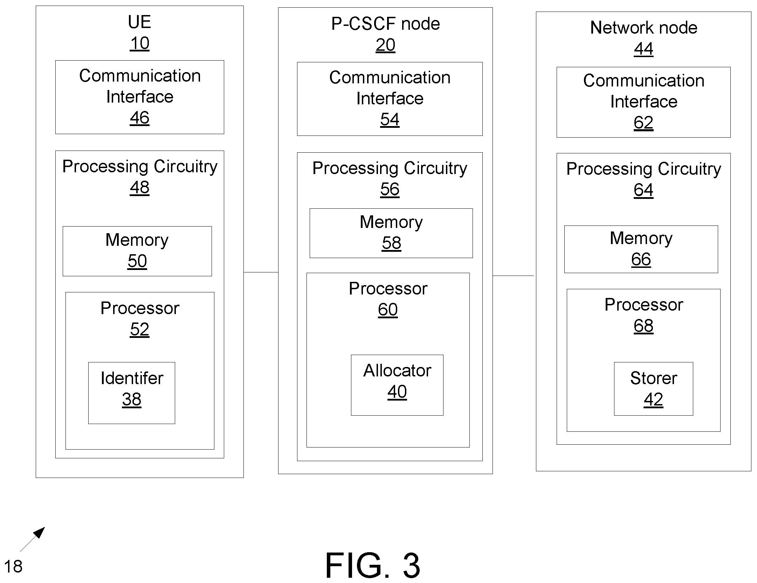

Example implementations, in accordance with an embodiment, of the UE 10, P-CSCF node 20, and a network node 44 (e.g., S-CSCF node, HSS node) discussed in the preceding paragraphs will now be described with reference to FIG. 3. Referring to FIG. 3, the system 18 includes a UE 10 and a P-CSCF node 20, and a network node 44. The network node 44 can be any network node, such as e.g., an IMS node, such as, a serving-call session control function (S-CSCF) node, an interrogating-call session control function (I-CSCF) node, etc. or another network node, such as an application server (AS), e.g., multimedia telephony AS (MTAS) or any of the nodes shown in FIG. 2, such as the HSS node.

It should be noted that, for simplicity, a single node is shown for the various entities in the system 18 depicted in FIGS. 2 and 3 (e.g., a single UE 10, a single P-CSCF node 20, a single network node 44); however, it should be understood that the system 18 may include numerous entities/nodes of those shown in FIGS. 2 and 3, as well as, additional entities/nodes not shown in FIGS. 2 and 3. In addition, the system 18 may include many more connections and/or interfaces than those shown in FIGS. 2 and 3.

The UE 10 includes a communication interface 46, processing circuitry 48, and memory 50. The communication interface 46 may be configured to communicate with a radio access network (RAN) such as a base station (e.g. gNB) and/or other elements in the system 18 such as for example the P-CSCF node 20 and/or another UE 10 according to the techniques in the present disclosure. In some embodiments, the communication interface 46 may be formed as or may include, for example, one or more radio frequency (RF) transmitters, one or more RF receivers, and/or one or more RF transceivers, and/or may be considered a radio interface. In some embodiments, the communication interface 46 may also include a wired interface.

The processing circuitry 48 may include one or more processors 52 and memory, such as, the memory 50. In particular, in addition to a traditional processor and memory, the processing circuitry 48 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 52 may be configured to access (e.g., write to and/or read from) the memory 50, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

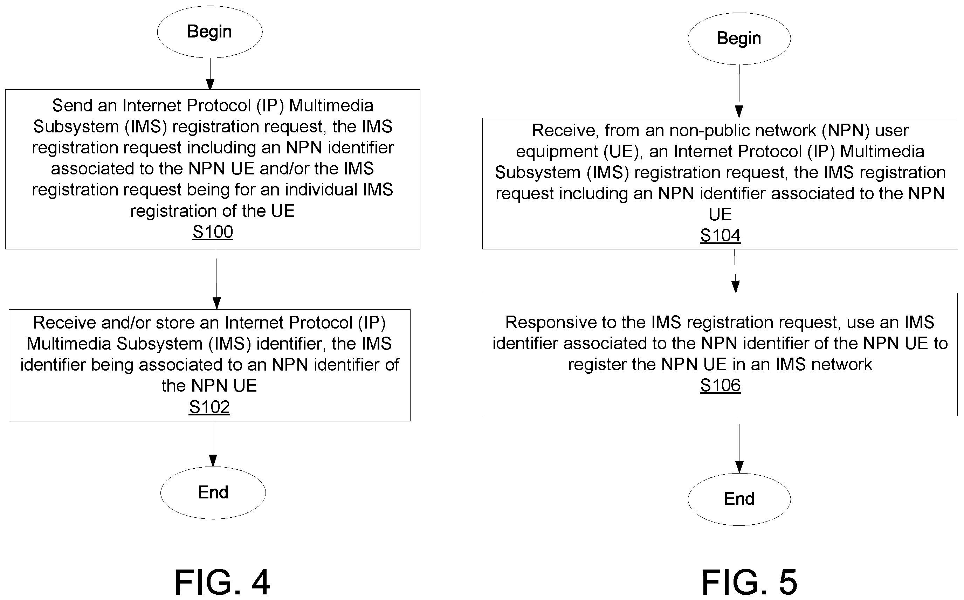

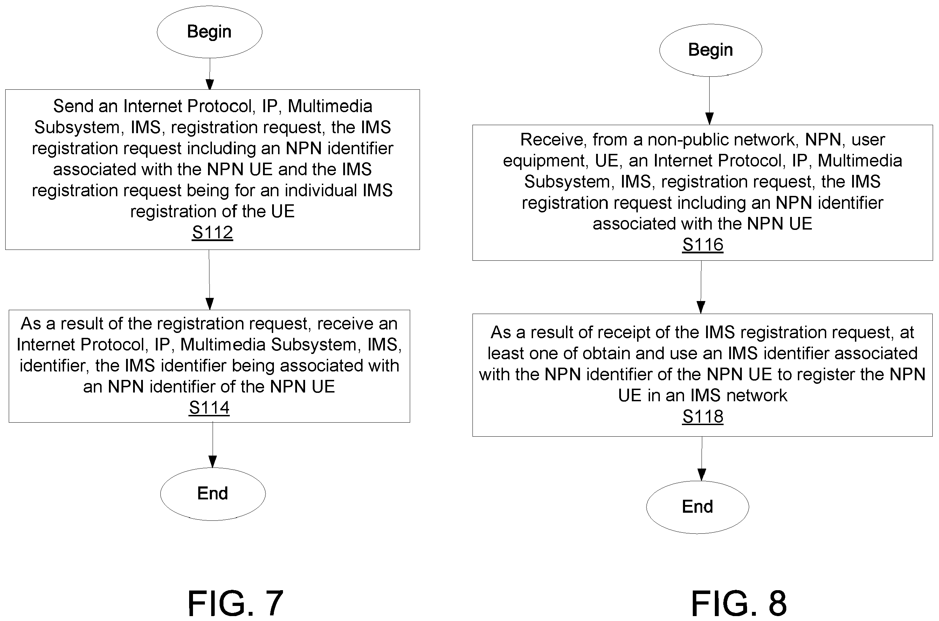

Thus, the UE 10 may further include software stored internally in, for example, memory 50, or stored in external memory (e.g., database) accessible by the UE 10 via an external connection. The software may be executable by the processing circuitry 48. The processing circuitry 48 may be configured to control any of the methods and/or processes described herein and/or to cause such methods, and/or processes to be performed, e.g., by the UE 10. The memory 50 is configured to store data, programmatic software code and/or other information described herein. In some embodiments, the software may include instructions stored in memory 50 that, when executed by the processor 52 and/or identifier 38 causes the processing circuitry 48 and/or configures the UE 10 to perform the processes described herein with respect to the UE 10 such the processes described with reference to FIGS. 4 and 7 and the other figures.

The P-CSCF node 20 includes a communication interface 54, processing circuitry 56, and memory 58. The communication interface 54 may be configured to communicate with UE 10 and/or other elements in the system 18 to facilitate interworking stand-alone NPN-IMS according to one or more of the techniques in the present disclosure. In some embodiments, the communication interface 54 may be formed as or may include, for example, one or more radio frequency (RF) transmitters, one or more RF receivers, and/or one or more RF transceivers, and/or may be considered a radio interface. In some embodiments, the communication interface 54 may also include a wired interface.

The processing circuitry 56 may include one or more processors 60 and memory, such as, the memory 58. In particular, in addition to a traditional processor and memory, the processing circuitry 56 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 60 may be configured to access (e.g., write to and/or read from) the memory 58, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the P-CSCF node 20 may further include software stored internally in, for example, memory 58, or stored in external memory (e.g., database) accessible by the P-CSCF node 20 via an external connection. The software may be executable by the processing circuitry 56. The processing circuitry 56 may be configured to control any of the methods and/or processes described herein and/or to cause such methods, and/or processes to be performed, e.g., by the P-CSCF node 20. The memory 58 is configured to store data, programmatic software code and/or other information described herein. In some embodiments, the software may include instructions stored in memory 58 that, when executed by the processor 60 and/or allocator 40, causes the processing circuitry 56 and/or configures the P-CSCF node 20 to perform the processes described herein with respect to the P-CSCF node 20 (e.g., processes described with reference to FIGS. 5 and 8 and/or any of the other figures).

The network node 44 (e.g., S-CSCF node, etc.) includes a communication interface 62, processing circuitry 64, and memory 66. The communication interface 62 may be configured to communicate with other elements in the system 18 to facilitate interworking stand-alone NPN-IMS according to one or more of the techniques in the present disclosure. In some embodiments, the communication interface 62 may be formed as or may include, for example, one or more radio frequency (RF) transmitters, one or more RF receivers, and/or one or more RF transceivers, and/or may be considered a radio interface. In some embodiments, the communication interface 62 may also include a wired interface.

The processing circuitry 64 may include one or more processors 68 and memory, such as, the memory 66. In particular, in addition to a traditional processor and memory, the processing circuitry 64 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 68 may be configured to access (e.g., write to and/or read from) the memory 66, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

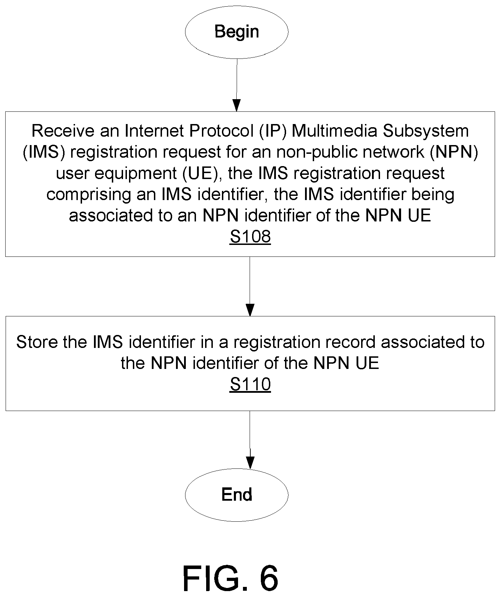

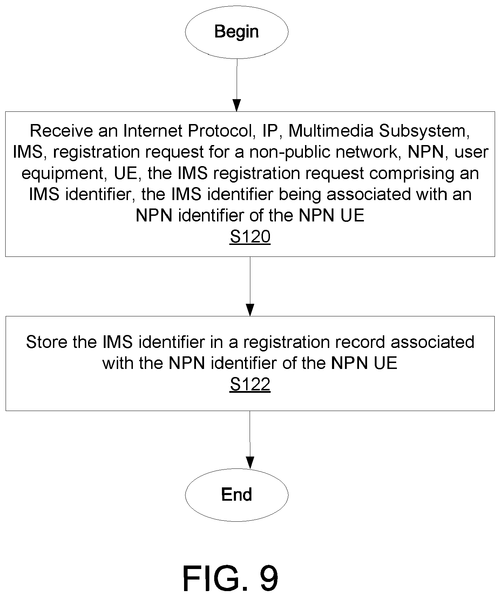

Thus, the network node 44 may further include software stored internally in, for example, memory 66, or stored in external memory (e.g., database) accessible by the network node 44 via an external connection. The software may be executable by the processing circuitry 64. The processing circuitry 64 may be configured to control any of the methods and/or processes described herein and/or to cause such methods, and/or processes to be performed, e.g., by the network node 44. The memory 66 is configured to store data, programmatic software code and/or other information described herein. In some embodiments, the software may include instructions stored in memory 66 that, when executed by the processor 68 and/or storer 42, causes the processing circuitry 64 and/or configures the network node 44 to perform the processes described herein with respect to the network node 44 (e.g., S-CSCF node) such as the processes described with respect to FIGS. 6 and 9 and the other figures.

In FIG. 3, the connection between the devices UE 10, P-CSCF node 20 and network node 44 is shown without explicit reference to any intermediary devices or connections. However, it should be understood that intermediary devices and/or connections may exist between these devices, although not explicitly shown.

Although FIG. 3 shows identifier 38, allocator 40 and storer 42, as being within a respective processor, it is contemplated that these elements may be implemented such that a portion of the elements is stored in a corresponding memory within the processing circuitry. In other words, the elements may be implemented in hardware or in a combination of hardware and software within the processing circuitry.

FIG. 4 is a flowchart of an exemplary process in a UE 10 for facilitating interworking stand-alone NPN-IMS according to the arrangements disclosed herein. One or more Blocks and/or functions and/or methods performed by the UE 10 may be performed by one or more elements of UE 10 such as by identifier 38 in processing circuitry 48, memory 50, processor 52, communication interface 46, etc. according to the example process/method. The method includes sending (Block S 100), such as via identifier 38, processing circuitry 48, memory 50, processor 52, and/or communication interface 46, an Internet Protocol (IP) Multimedia Subsystem (IMS) registration request, the IMS registration request including an NPN identifier associated to the NPN UE and/or the IMS registration request being for an individual IMS registration of the UE 10; and as a result of the registration request, receiving and/or storing (Block S102), such as via identifier 38, processing circuitry 48, memory 50, processor 52, and/or communication interface 46, an Internet Protocol (IP) Multimedia Subsystem (IMS) identifier, the IMS identifier being associated to the NPN identifier of the NPN UE 10.

In some embodiments, the method includes registering, such as via identifier 38, processing circuitry 48, memory 50, processor 52, and/or communication interface 46, to an IMS network using the IMS identifier. In some embodiments, the method includes sending, such as via identifier 38, processing circuitry 48, memory 50, processor 52, and/or communication interface 46, an IMS registration request, the IMS registration request including the IMS identifier in a SIP header. In some embodiments, the method includes receiving, such as via identifier 38, processing circuitry 48, memory 50, processor 52, and/or communication interface 46, a SIP INVITE message, the SIP INVITE message comprising an originating identity header indicating the NPN identifier. In some embodiments, the individual IMS registration of the NPN UE 10 is separate from an IMS registration of a wildcarded IMPU for the NPN domain. In some embodiments, the IMS identifier is one of an allocated IMS identifier and a manually configured IMS identifier.

FIG. 5 is a flowchart of an exemplary process in a P-CSCF node 20 for facilitating interworking stand-alone NPN-IMS according to the arrangements disclosed herein. One or more Blocks and/or functions and/or methods performed by the P-CSCF node 20 may be performed by one or more elements of P-CSCF node 20 such as by allocator 40 in processing circuitry 56, memory 58, processor 60, communication interface 54, etc. according to the example process/method. The method includes receiving (Block S 104), such as via allocator 40, processing circuitry 56, memory 58, processor 60 and/or communication interface 54, from a non-public network (NPN) user equipment (UE), an Internet Protocol (IP) Multimedia Subsystem (IMS) registration request, the IMS registration request including an NPN identifier associated to the NPN UE 10. The method includes responsive to the IMS registration request, at least one of obtaining and using (Block S 106), such as via allocator 40, processing circuitry 56, memory 58, processor 60 and/or communication interface 54, an IMS identifier associated to the NPN identifier of the NPN UE 10 to register the NPN UE 10 in an IMS network.

In some embodiments, the at least one of the obtaining and the using the IMS identifier associated to the NPN identifier of the NPN UE to register the NPN UE in the IMS network further includes allocating, such as via allocator 40, processing circuitry 56, memory 58, processor 60 and/or communication interface 54, an IMS identifier associated with the NPN and associating the allocated IMS identifier to the NPN identifier of the NPN UE 10. In some embodiments, the at least one of the obtaining and the using the IMS identifier associated to the NPN identifier of the NPN UE to register the NPN UE in the IMS network further includes fetching, such as via allocator 40, processing circuitry 56, memory 58, processor 60 and/or communication interface 54, the allocated IMS identifier that is associated to the NPN identifier of the NPN UE. In some embodiments, the at least one of the obtaining and the using the IMS identifier associated to the NPN identifier of the NPN UE to register the NPN UE in the IMS network further includes obtaining, such as via allocator 40, processing circuitry 56, memory 58, processor 60 and/or communication interface 54, a manually configured IMS identifier associated with the NPN UE 10 and/or associating the manually configured IMS identifier to the NPN identifier of the NPN UE 10. In some embodiments, using the IMS identifier associated to the NPN identifier of the NPN UE to register the NPN UE in the IMS network further includes including, such as via allocator 40, processing circuitry 56, memory 58, processor 60 and/or communication interface 54, the IMS identifier in the IMS registration request and forwarding the IMS registration request toward a serving-call session control function (S-CSCF) node for IMS registration of the NPN UE 10.

In some embodiments, the IMS identifier is a Tel-uniform resource indicator (Tel-URI) and/or the NPN identifier of the NPN UE 10 is a SIP URI. In some embodiments, the IMS identifier is a SIP URI comprising a telephone number. In some embodiments, the IMS identifier is one of an allocated IMS identifier and a manually configured IMS identifier. In some embodiments, the IMS identifier is an IMS Public User Identity (IMPU). In some embodiments, the allocated IMS identifier is a free individual identity allocated from a wildcarded identity of the NPN domain. In some embodiments, using the IMS identifier associated to the NPN identifier of the NPN UE 10 to register the NPN UE 10 in the IMS network further includes including the IMS identifier in a SIP header in one or more of the IMS registration request; and/or a SIP INVITE message. In some embodiments, the method further includes at least one of, such as via allocator 40, processing circuitry 56, memory 58, processor 60 and/or communication interface 54: replacing, in a SIP INVITE message, at least one field including the NPN identifier with the IMS identifier; including in a SIP INVITE message the NPN identifier in an originating identity header; and replacing, in a SIP INVITE message, at least one field including the IMS identifier with the NPN identifier. In some embodiments, the method further includes as a result of the IMS registration request, associating, such as via allocator 40, processing circuitry 56, memory 58, processor 60 and/or communication interface 54, the allocated IMS identifier and/or the manually configured IMS identifier and/or the NPN identifier of the NPN UE 10 to a wildcarded identity for the NPN domain.

In some embodiments, the IMS registration request is for an individual IMS registration of the UE 10; and/or the individual IMS registration of the UE 10 is separate from an IMS registration of a wildcarded IMPU for the NPN domain.

FIG. 6 is a flowchart of an exemplary process in a network node 44 for facilitating interworking stand-alone NPN-IMS according to the arrangements disclosed herein. One or more Blocks and/or functions and/or methods performed by the network node 44 may be performed by one or more elements of network node 44 such as storer 42 in processing circuitry 64, memory 66, processor 68, communication interface 62, etc. according to the example process/method. The method includes receiving (Block S 108), such as via storer 42, processing circuitry 64, memory 66, processor 68 and/or communication interface 62, an Internet Protocol (IP) Multimedia Subsystem (IMS) registration request for an non-public network (NPN) user equipment (UE) 10, the IMS registration request comprising an IMS identifier, the IMS identifier being associated to an NPN identifier of the NPN UE 10. The method may include storing (Block S 110), such as via storer 42, processing circuitry 64, memory 66, processor 68 and/or communication interface 62, the IMS identifier in a registration record associated to the NPN identifier of the NPN UE 10. In some embodiments, the network node 44 is a serving-call session control function (S-CSCF) node. In some embodiments, the method further includes associating, such as via storer 42, processing circuitry 64, memory 66, processor 68 and/or communication interface 62, the registration record to a wildcarded registration record for the NPN domain. In some embodiments, the IMS identifier is one of an allocated IMS identifier and a manually configured IMS identifier.

In some embodiments, the IMS registration request is for an individual IMS registration of the UE; and/or the individual IMS registration of the UE is separate from an IMS registration of a wildcarded IMPU for the NPN domain.

FIG. 7 is a flowchart of an exemplary process in a UE 10 for facilitating interworking stand-alone NPN-IMS according to the arrangements disclosed herein. One or more Blocks and/or functions and/or methods performed by the UE 10 may be performed by one or more elements of UE 10 such as by identifier 38 in processing circuitry 48, memory 50, processor 52, communication interface 46, etc. according to the example process/method. The method includes sending (S 112), such as by identifier 38, processing circuitry 48, memory 50, processor 52 and/or communication interface 46, an Internet Protocol, IP, Multimedia Subsystem, IMS, registration request, the IMS registration request including an NPN identifier associated with the NPN UE and the IMS registration request being for an individual IMS registration of the UE. The method includes as a result of the registration request, receiving (S114), such as by identifier 38, processing circuitry 48, memory 50, processor 52 and/or communication interface 46, an Internet Protocol, IP, Multimedia Subsystem, IMS, identifier, the IMS identifier being associated with the NPN identifier of the NPN UE.

In some embodiments, the method further includes sending, such as by identifier 38, processing circuitry 48, memory 50, processor 52 and/or communication interface 46, a second IMS registration request, the second IMS registration request including the IMS identifier in a session initiation protocol, SIP, header. In some embodiments, the method further includes receiving, such as by identifier 38, processing circuitry 48, memory 50, processor 52 and/or communication interface 46, a session initiation protocol, SIP, INVITE message, the SIP INVITE message comprising an originating identity header indicating the NPN identifier. In some embodiments, the individual IMS registration of the UE is separate from an IMS registration of a wildcarded IMS Public User Identity, IMPU, for the NPN domain. In some embodiments, the IMS identifier comprises one of an allocated IMS identifier and a manually configured IMS identifier.

FIG. 8 is a flowchart of an exemplary process in a P-CSCF node 20 for facilitating interworking stand-alone NPN-IMS according to the arrangements disclosed herein. One or more Blocks and/or functions and/or methods performed by the P-CSCF node 20 may be performed by one or more elements of P-CSCF node 20 such as by allocator 40 in processing circuitry 56, memory 58, processor 60, communication interface 54, etc. according to the example process/method. The method includes receiving (S116), such as by allocator 40, processing circuitry 56, memory 58, processor 60 and/or communication interface 54, from a non-public network, NPN, user equipment, UE, an Internet Protocol, IP, Multimedia Subsystem, IMS, registration request, the IMS registration request including an NPN identifier associated with the NPN UE. The method includes as a result of receipt of the IMS registration request, at least one of obtaining and using (Block S 1 18), such as by allocator 40, processing circuitry 56, memory 58, processor 60 and/or communication interface 54, an IMS identifier associated with the NPN identifier of the NPN UE to register the NPN UE in an IMS network.

In some embodiments, the obtaining the IMS identifier associated with the NPN identifier of the NPN UE to register the NPN UE in the IMS network further includes allocating, such as by allocator 40, processing circuitry 56, memory 58, processor 60 and/or communication interface 54, the IMS identifier associated with the NPN and associating the allocated IMS identifier to the NPN identifier of the NPN UE. In some embodiments, the obtaining the IMS identifier associated with the NPN identifier of the NPN UE to register the NPN UE in the IMS network further comprises fetching, such as by allocator 40, processing circuitry 56, memory 58, processor 60 and/or communication interface 54, the IMS identifier that is associated with the NPN identifier of the NPN UE.

In some embodiments, the obtaining the IMS identifier associated with the NPN identifier of the NPN UE to register the NPN UE in the IMS network further comprises obtaining, such as by allocator 40, processing circuitry 56, memory 58, processor 60 and/or communication interface 54, a manually configured IMS identifier associated with the NPN UE and associating the manually configured IMS identifier to the NPN identifier of the NPN UE. In some embodiments, using the IMS identifier associated with the NPN identifier of the NPN UE to register the NPN UE in the IMS network further comprises including, such as by allocator 40, processing circuitry 56, memory 58, processor 60 and/or communication interface 54, the IMS identifier in the IMS registration request and forwarding the IMS registration request toward a serving-call session control function, S-CSCF, node for IMS registration of the NPN UE.

In some embodiments, the IMS identifier comprises at least one of: a Tel-uniform resource indicator, Tel-URI, comprising a telephone number; a Session Initiation Protocol, SIP, URI comprising a telephone number; an IMS Public User Identity, IMPU; one of an allocated IMS identifier and a manually configured IMS identifier; and a free individual identity allocated from a wildcarded identity of the NPN domain. In some embodiments, the NPN identifier of the NPN UE comprises a Session Initiation Protocol, SIP, uniform resource indicator, URI. In some embodiments, using the IMS identifier associated with the NPN identifier of the NPN UE to register the NPN UE in the IMS network further comprises including, such as by allocator 40, processing circuitry 56, memory 58, processor 60 and/or communication interface 54, the IMS identifier in a SIP header in at least one of: the IMS registration request; and/or a SIP INVITE message.

In some embodiments, the method further includes replacing, such as by allocator 40, processing circuitry 56, memory 58, processor 60 and/or communication interface 54, in a SIP INVITE message, at least one field including the NPN identifier with the IMS identifier; and including in a SIP INVITE message the NPN identifier in an originating identity header. In some embodiments, the method further includes replacing, such as by allocator 40, processing circuitry 56, memory 58, processor 60 and/or communication interface 54, in a SIP INVITE message, at least one field including the IMS identifier with the NPN identifier.

In some embodiments, the method further includes as a result of the IMS registration request, associating, such as by allocator 40, processing circuitry 56, memory 58, processor 60 and/or communication interface 54, the IMS identifier and the corresponding NPN identifier of the NPN UE to a wildcarded identity allocated to the NPN domain. In some embodiments, the IMS registration request is for an individual IMS registration of the UE; and the individual IMS registration of the UE is separate from an IMS registration of a wildcarded IMS Public User Identity, IMPU, for the NPN domain.

FIG. 9 is a flowchart of an exemplary process in a network node 44 for facilitating interworking stand-alone NPN-IMS according to the arrangements disclosed herein. One or more Blocks and/or functions and/or methods performed by the network node 44 may be performed by one or more elements of network node 44 such as storer 42 in processing circuitry 64, memory 66, processor 68, communication interface 62, etc. according to the example process/method. The method includes receiving (Block S120), such as by storer 42, processing circuitry 64, memory 66, processor 68 and/or communication interface 62, an Internet Protocol, IP, Multimedia Subsystem, IMS, registration request for a non-public network, NPN, user equipment, UE, the IMS registration request comprising an IMS identifier, the IMS identifier being associated with an NPN identifier of the NPN UE. The method includes storing (Block S122), such as by storer 42, processing circuitry 64, memory 66, processor 68 and/or communication interface 62, the IMS identifier in a registration record associated with the NPN identifier of the NPN UE.

In some embodiments, the network node is a serving-call session control function, S-CSCF, node. In some embodiments, the method further includes associating, such as by storer 42, processing circuitry 64, memory 66, processor 68 and/or communication interface 62, the registration record to a wildcarded registration record for the NPN domain. In some embodiments, at least one of: the IMS registration request is for an individual IMS registration of the NPN UE; and the individual IMS registration of the NPN UE is separate from an IMS registration of a wildcarded IMS Public User Identity, IMPU, for the NPN domain. In some embodiments, the IMS identifier is one of an allocated IMS identifier and a manually configured IMS identifier.

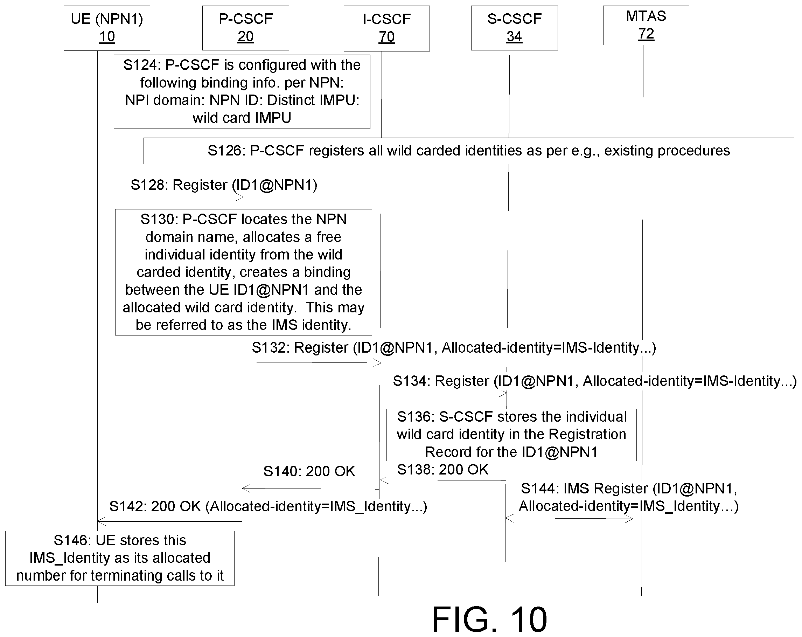

Having generally described arrangements for interworking stand-alone NPN-IMS, a more detailed description of some of the embodiments are provided as follows with reference to the call flow diagrams in FIGS. 10-13, and which may be implemented by UE 10, P-CSCF node 20 and/or network node 44 (e.g., S-CSCF node).

It should be noted that the names used for new SIP headers or parameters (e.g., Originating_Identity and Allocated_Identity) disclosed herein are not intended to be limiting as they may ultimately be called by another name and yet perform the same/similar function as disclosed herein. For example, SIP header Originating-Identity may be also called header "Additional-Identity." In addition, the identifiers disclosed herein (e.g., Originating_Identity and Allocated_Identity) may be included in new SIP headers in some embodiments, or may be included as new parameters in existing SIP headers to convey the information in other embodiments.

Referring to FIG. 10, the call flow diagram illustrates an example of when an NPN UE 10 registers with IMS for the first time to acquire an IMS identity. A new SIP header, Allocated_Identity, may be used to convey the allocated IMS identity (e.g., IMS_Identity). Optionally, in some embodiments, a parameter may be included in the returned binding information that may include the Allocated_Identity.

### IMS Registration for Initial Allocation of IMS Identity for NPN UE

As a prerequisite, in step S124, the P-CSCF node 20 is configured with the NPNs' information, such as the NPNs' domains names and distinct IMPUs to register the wild carded IMPU allocated to the NPN based on procedures in e.g., 3GPP TS 23.228. If more than a single P-CSCF node 20 is used for the NPN, then additional configuration information to avoid allocation collisions may also be provisioned as described above.

Optionally and not shown in FIG. 10, I-CSCF nodes 70 and S-CSCF nodes 34 can be configured with NPN domains to be supported as well. This may be used for example for additional verification.

In step S126, the P-CSCF node 20 registers the distinct IMPU for each NPN it will support using e.g., procedures in TS 23.228.

In step S128, an NPN UE 10 registers its NPN identity with the P-CSCF node 20.

In step S130, the P-CSCF node 20 may determine that this is an initial IMS registration from the NPN UE 10 to acquire an IMS identity as a result of, for example, the P-CSCF node 20 determining that there is not an entry (e.g., of an IMS identity) for the registered NPN identity of the NPN UE 10. The P-CSCF node 20 validates the NPN domain, then allocates a free individual IMPU from the wild carded identity to use in the IMS domain name using configuration information for that purpose. The P-CSCF node 20 stores this entry (e.g., the allocated IMS IMPU) in addition to the UE's 10 NPN identity in the UE 10 registration record. Such registration record may be associated to the main wild carded registration record. The P-CSCF node 20 also may permanently store this information and associate it to the UE's 10 NPN identity so that the information can be e.g., obtained in subsequent IMS registrations for the UE 10.

The allocated IMS IMPU may also be referred to as "IMS Identity" or "allocated IMS identity". The "IMS Identity" may be interchangeably called as "IMS identifier" in this disclosure. In some embodiments, this allocated IMS Identity/identifier is a SIP URI having a telephone number (or a series of digits representing a telephone number).

In steps S132-S134, the P-CSCF node 20 forwards both the UE's 10 NPN identity and the allocated IMS Identity to the I-CSCF node 70 then to the S-CSCF node 34. The allocated IMS Identity may be conveyed in a new SIP header called for example "Allocated-Identity".

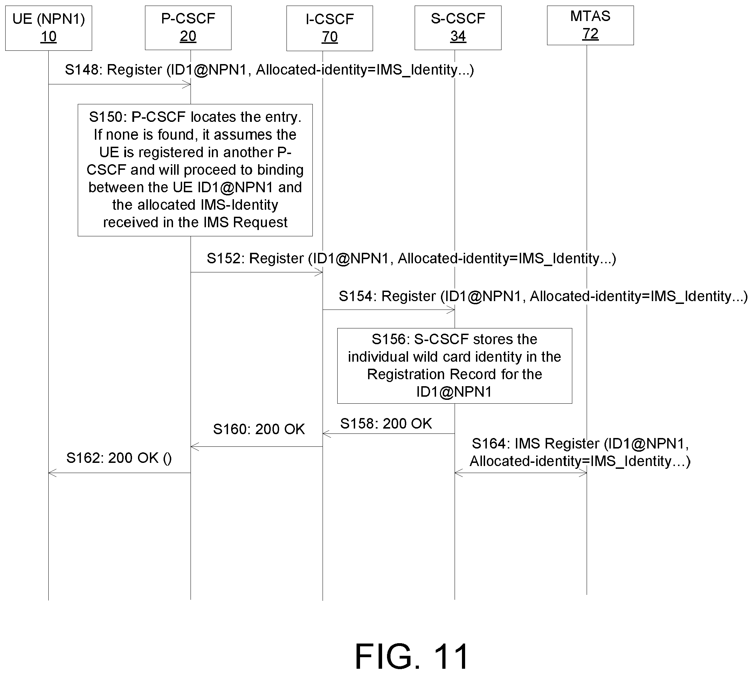

In step S136, the S-CSCF node 34 (e.g., network node 44) stores in the UE Registration record the NPN identity and the associated allocated IMS Identity. This may be useful particularly in a11 cases whether a single or multiple P-CSCF nodes 20 are used for the NPN UE 10. This UE Registration record may be associated to the main wild carded registration record. In some embodiments, this may be considered a new behavior in the S-CSCF node since, typically, when the wild carded IMPU registers, e.g., in cases involving real PBXs, all incoming sessions are delivered to the P-CSCF node 20 and there is no individual IMS registration e.g., by the UE 10. In other words, there is typically only a single registration for the wild carded identity for the NPN domain. Thus, in some embodiments, individual IMS registration of the NPN UE 10 (see e.g., step S128 of FIG. 10 and/or step S148 of FIG. 11) may be considered a new behavior disclosed herein to e.g., provide for more efficient support of virtual PBX as compared to existing arrangements. In some embodiments, the IMS may perform the role of virtual PBX and hence the UE 10 may register as well.

Steps S138-S140 carries the SIP 200 OK message for the IMS registration to the P-CSCF node 20.

In step S142, the P-CSCF node 20 returns the allocated IMS Identity in the new SIP header Allocated-Identity.

In step S144, the S-CSCF node 34 performs third party registration with an application server, such as MTAS 72.

In step S146, the NPN UE 10 stores this allocated IMS Identity as its allocated phone number for terminating calls to it.

### Subsequent IMS Registration Using Allocated IMS Identity for NPN UE

Referring now to FIG. 11, a call flow diagram of an example of a subsequent IMS Registration when an NPN UE 10 has already been allocated an IMS Identity.

In this call flow in FIG. 11, one main difference with the initial IMS registration flow described above for FIG. 10 is that the NPN UE 10 includes its allocated IMS Identity in the SIP Register request and therefore, the P-CSCF node 20 (instead of allocating the IMS Identity) locates the entry for the NPN UE 10 that is associated to the IMS Identity to perform the IMS registration.

In step S148, the UE 10 includes its allocated IMS Identity in the SIP Register request.

In step S150, for a single P-CSCF node 20 handling this NPN, the P-CSCF node 20 locates the entry for the NPN UE Identity and the registration proceeds regarding the creation of the registration record for the NPN UE 10 as described above in the initial IMS registration.

In cases of multiple P-CSCF nodes 20, it may be possible that the NPN UE 10 is using a new P-CSCF node 20 that did not allocate the IMS Identity, but the P-CSCF node 20 cannot validate the included identity other than being in the wild card. For example, the P-CSCF node 20 may attempt to locate the entry associated to the allocated IMS Identity included in the IMS Registration request. If the P-CSCF node 20 cannot identify such an entry, the P-CSCF node 20 may assume that the UE 10 registered using another P-CSCF node 20 and may therefore proceed with the binding between the UE 10 (e.g., UE ID1@NPN1) and the allocated IMS Identity received in the IMS Registration request. The P-CSCF node 20 may then proceed as in the single P-CSCF case.

The remainder of the steps, S152-S164 are identical/similar to the initial IMS registration case, e.g., described above for steps S132-S146 in FIG. 10, and therefore are not be repeated again for the sake of brevity.

In another variant of the example call flow diagram depicted in FIG. 11, the NPN UE 10 may *not* include the allocated IMS Identity in the Allocated_Identity SIP header in the SIP Register request. In such embodiments, in the case of a single P-CSCF node deployment, the P-CSCF node 20 identifies or locates the allocated IMS identity for the NPN UE 10 since the P-CSCF node 20 has previously stored such allocated IMS identity associated to the NPN UE 10. In the case of multiple P-CSCF deployments, in some embodiments, a centralized database (e.g. network node 44) may be used to store registering NPN UE identities and the associated allocated IMS identities as well as the binding between. This may allow the P-CSCF node 20 to fetch the information (e.g., fetch the allocated IMS identity that is associated to the NPN identity of the UE 10 that has sent the SIP Register request).

### NPN UE - Call Origination

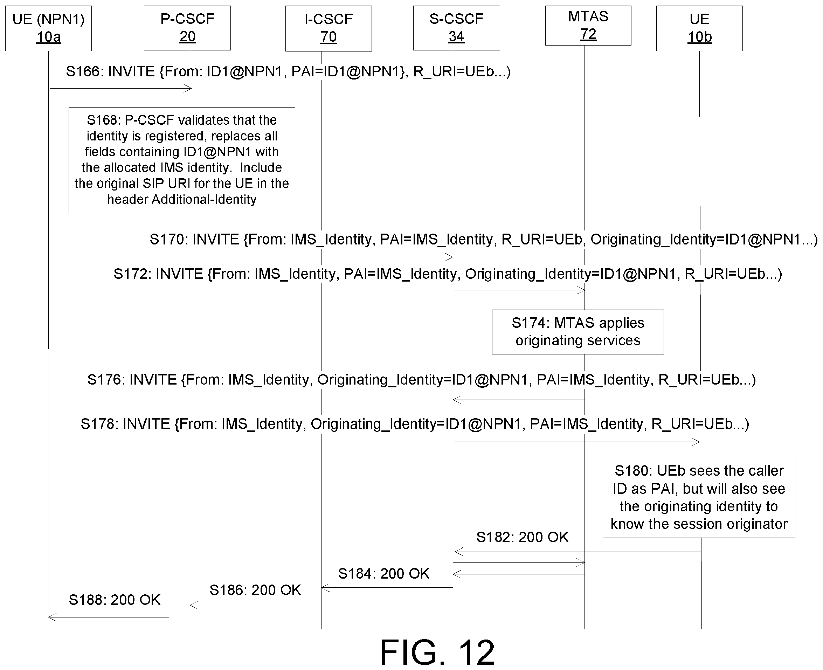

Referring now to FIG. 12, a call flow diagram of an example call origination scenario where the NPN UE 10a originates an IMS session is described.

In step S166, the UE 10a includes its NPN identity in the From and P-Asserted-Identity (PAI) headers, and the Request-URI carries the Target (e.g., UEb 10b) for the session.

In step S168, the P-CSCF node 20 validates that such a user has a registration record and replaces all SIP headers including the UE NPN identity with the allocated IMS Identity for the UE 10a that is stored in the Registration record. The original UE NPN identity (e.g., original SIP URI) may be included in a new SIP header "Originating-Identity".

In steps S170-S172, the SIP INVITE message including the Originating-Identity may be sent to the MTAS 72.

In step S174, the MTAS 72 may perform originating services according the wild carded service profile.

Once that is performed, the MTAS 72 may forward the SIP INVITE message to its next hop.

In step S176, the SIP INVITE message is forward from the MTAS 72 to the S-CSCF node 34. In step S178, the S-CSCF node 34 forwards the SIP INVITE message to UEb 10b. In step S180, the UEb 10b may observe the caller ID as PAI, but may also observe the Originating-Identity in order to determine the session originator.

The target UEb 10b may accept the session. In steps S182-S188, the UEb 10b sends a 200 OK message towards UEa 10a.

The UEb 10b may use the Originating-Identity header for the sole purpose of being able to correlate the caller ID to someone it can relate to. In some embodiments, it may not be used for any other purpose. It could also be conveyed in a parameter in the caller ID information. The caller ID may be what is used for callback. Hence, in some embodiments, the Originating-Identity may be considered optional and, if conveyed, can be conveyed/transmitted in existing SIP headers as an additional parameter, for example, in the contact information of the SIP INVITE message.

### NPN UE - Call Termination

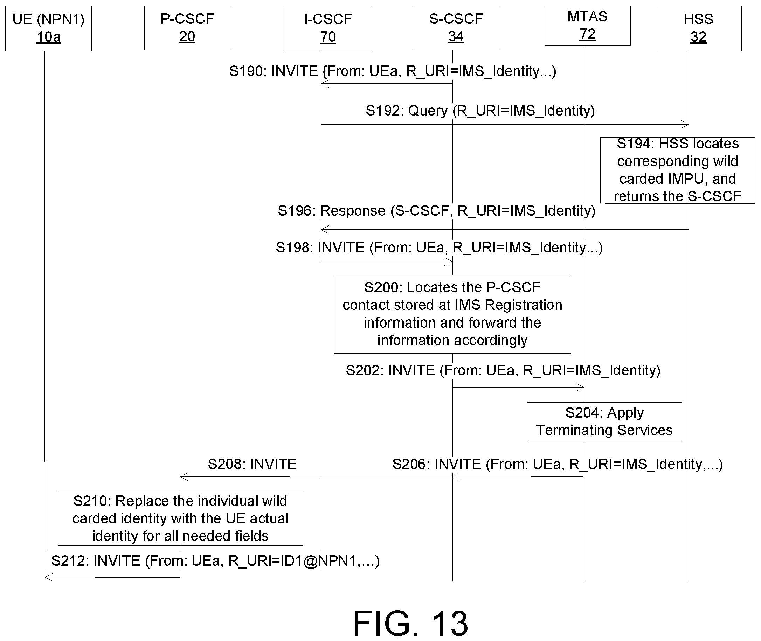

Referring now to FIG. 13, a call flow diagram of an example call termination scenario in which e.g., a call is terminated at NPN UE 10. NPN users may be called with the allocated IMS Identity received for the call via e.g., offline means or the caller ID from an incoming session.

In step S190, a SIP INVITE message arrives to the I-CSCF node 70 targeted to an NPN UE 10 identified by an allocated IMS Identity. In some embodiments, the incoming SIP INVITE may arrive to the I-CSCF node 70 from any S-CSCF node 34 in any IMS network including this one. For example, in one embodiment, the incoming SIP INVITE may arrive to the I-CSCF node 70 from the S-CSCF node 34 in the same IMS network (e.g., IMS network that the UE 10 is IMS registered to). In another embodiment, the incoming SIP INVITE may arrive to the I-CSCF node 70 from a S-CSCF node in a different IMS network (e.g., different IMS network than the IMS network that the UE 10 is IMS registered to).

In step S192, the I-CSCF node 70 queries a UDM/HSS node 32 with the UE's 10 IMS Identity.

In step S194, the UDM/HSS node 32 locates the wild carded IMS Identity for the NPN domain and the S-CSCF node 34, and returns the response to the I-CSCF node 70 in step S196.

In step S198, the I-CSCF node 70 forwards the SIP INVITE message including the IMS Identity to the S-CSCF node 34.

In step S200, the S-CSCF node 34 locates the entry associated with the IMS identity, and if the entry can be located, meaning that the target NPN subscriber is IMS registered, the S-CSCF node 34 then forwards the SIP INVITE message to the P-CSCF node 20 via e.g., a multimedia telephony application server (MTAS) (regular IMS routing) in step S202. In some embodiments, this may be considered new behavior since e.g., in typical PBXs the session is generally always delivered to the PBX given that there is a single IMS registration for the PBX and all its users.

In step S204, the MTAS 72 performs terminating services, then the request is forwarded back to the S-CSCF node 34 in step S206. The S-CSCF node 34 locates the P-CSCF node 20 where the UE 10 is IMS registered, and forwards the SIP INVITE message to the P-CSCF node 20 in step S208.

In step S210, the P-CSCF node 20 replaces the individual wild carded IMS Identity in the SIP INVITE message with the UE's 10 NPN identity and the session is delivered to the target UE 10. In step S212, the SIP INVITE is forwarded to the target UE 10.

Signalling showing the acceptance of the SIP session by the target UE 10 is not shown for the sake of brevity.

### Subscription Termination for an NPN UE

For an NPN UE 10 termination of use of IMS services, at least 2 options may be available:
- manual deletion of the database entry holding the NPN UE identity and the allocated IMS identity (e.g., allocated IMS IMPU); and/or
- Extending the SIP Register request to support a reserved time (e.g., a predetermined time period of inactivity) to imply or to assume a subscription termination.

### Subscription Renewal of an NPN UE

For an NPN UE 10 to resume subscription, the NPN UE 10 may initiate a new IMS Register request, similar to the initial IMS Registration Request (e.g., in step 3 of the call flow diagram in FIG. 10). However, if the NPN subscriber wants to be allocated the same IMPU it was previously allocated, then at subscription deletion the system (e.g., P-CSCF node, S-CSCF node, central database, etc.) may be configured to mark or indicate the NPN UE identity (e.g., IMPU-NPN UE identity) entry as "terminated subscription" (or the like) but not delete the entire entry. This may enable the previously allocated IMS identity (e.g., allocated IMPU) to be reallocated to the same NPN UE 10 in the future.

In some embodiments, the subscription termination may not be required or used since the NPN subscriber may remain unregistered if the NPN subscriber does not initiate, use or receive IMS services.

### Roaming Cases

If the NPN UE 10 roams in the 5GC PLMN of the IMS operator, then local breakout (LBO) may be used to establish an IMS protocol data unit (PDU) session. The traffic may be home routed to the NPN domain then back to an N3WIF in the 5GC of the operator. In either case there may be no impact on the IMS solution described herein.

### Manual Configuration

In some embodiments, for an NPN UE 10 that is already equipped with a telephone number, one or more of the two embodiments may be used as described below:
- If the phone number fits within the wild card, the phone number can be manually configured in the P-CSCF node 20. The P-CSCF node 20 then does not allocate an IMPU (i.e., the allocated IMS identity) in this embodiment when the NPN UE 10 registers in IMS (as with other embodiments). Instead, the manually configured IMPU (i.e., the existing phone number) is returned in this case. This manually configured IMPU/phone number will be treated just as the allocated IMS identity by the P-CSCF node 20 and will be subject to the same treatment as the ones allocated by the P-CSCF node 20. Thus, in some embodiments described herein above, the term "allocated IMS identifier" may be used interchangeably as "manually configured IMS identifier" since e.g., treatment of the identifiers will be the same in some embodiments except that the manually configured IMS identifier is manually configured in the P-CSCF node 20 (rather than being allocated at IMS registration, as with the allocated IMS identifier). For example, in step S130 of FIG. 10, as result of the UE 10 registering in IMS, the P-CSCF node 20 may obtain the manually configured IMS identifier and forward the manually configured IMS identifier to the I/S-CSCF in the registration request (instead of allocating an IMS identifier discussed in FIG. 10). Yet, the handling of the manually configured IMS identifier in the rest of the call flow diagram may the same as with the allocated IMS identifier. In some embodiments, the UE 10 may include the manually configured IMS identifier in the registration request, similar to step S148 of FIG. 11, in which the allocated IMS identifier is included in the registration request.
- If the phone number does not fit within the wild card, the wild card can be expanded to incorporate the phone number. The phone number can then be manually configured in the P-CSCF node 20.

In some embodiments in which there are too many phone numbers allocated to NPN UEs 10 and the phone numbers do not fit in a single wild card; more than a single wild card can be allocated for the NPN. Alternatively, for outlier allocated telephone numbers, individual entries can be defined in the HSS 32 and the S-CSCF 34 serving the wild card (e.g., an identifier or address of the S-CSCF 34) may be configured in the HSS 32 for these individual entries.

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, within the scope of the invention as defined by the claims.

It will be appreciated by persons skilled in the art that the embodiments described herein are not limited to what has been particularly shown and described herein above. In addition, unless mention was made above to the contrary, it should be noted that all of the accompanying drawings are not to scale.

## Claims

1. A method implemented in a proxy-call session control function, P-CSCF, node (20), the method comprising
receiving (S116), from a non-public network, NPN, user equipment, UE (10), an Internet Protocol, IP, Multimedia Subsystem, IMS, registration request, the IMS registration request including an NPN identifier associated with the NPN UE (10), wherein the IMS registration request is for an individual IMS registration of the NPN UE (10) and the individual IMS registration of the NPN UE is separate from an IMS registration of a wildcarded IMS Public User Identity, IMPU, for an NPN domain; and
as a result of receipt of the IMS registration request, obtaining and using (S118) an IMS identifier associated with the NPN identifier to register the NPN UE (10) in an IMS network.

2. A proxy-call session control function, P-CSCF, node (20), the P-CSCF node (20) comprising processing circuitry (56), the processing circuitry (56) configured to cause the P-CSCF node (20) to:
receive, from a non-public network, NPN, user equipment, UE (10), an Internet Protocol, IP, Multimedia Subsystem, IMS, registration request, the IMS registration request including an NPN identifier associated with the NPN UE (10), wherein the IMS registration request being for an individual IMS registration of the NPN UE (10), and the individual IMS registration of the NPN UE is separate from an IMS registration of a wildcarded IMS Public User Identity, IMPU, for an NPN domain; and
as a result of receipt of the IMS registration request, obtain and use an IMS identifier associated with the NPN identifier to register the NPN UE (10) in an IMS network.

3. The P-CSCF node (20) of Claim 2, wherein the processing circuitry 56 is further configured to cause the P-CSCF node (20) to obtain the IMS identifier associated with the NPN identifier of the NPN UE (10) by being configured to cause the P-CSCF node (20) to:
allocate the IMS identifier associated with the NPN and associate the allocated IMS identifier to the NPN identifier of the NPN UE (10); or
fetch the IMS identifier that is allocated with the NPN identifier of the NPN UE; or
obtain a manually configured IMS identifier associated with the NPN UE and associate the manually configured IMS identifier to the NPN identifier of the NPN UE.

4. The P-CSCF node (20) of any one of Claims 2-3, wherein the processing circuitry (56) is configured to cause the P-CSCF node (20) to use the IMS identifier associated with the NPN identifier of the NPN UE (10) to register the NPN UE (10) in the IMS network by being configured to cause the P-CSCF node (20) to:
include the IMS identifier in the IMS registration request and forward the IMS registration request toward a serving-call session control function, S-CSCF, node for IMS registration of the NPN UE (10).

5. The P-CSCF node (20) of any one of Claims 2-4, wherein the IMS identifier comprises at least one of:
a Tel-uniform resource indicator, Tel-URI, comprising a telephone number;
a Session Initiation Protocol, SIP, URI comprising a telephone number;
an IMS Public User Identity, IMPU;
one of an allocated IMS identifier and a manually configured IMS identifier; and
a free individual identity allocated from a wildcarded identity of the NPN domain.

6. The P-CSCF node (20) of any one of Claims 2-5, wherein the NPN identifier of the NPN UE (10) comprises a Session Initiation Protocol, SIP, uniform resource indicator, URI.

7. The P-CSCF node (20) of any one of Claims 2-6, wherein the processing circuitry (56) is configured to cause the P-CSCF node (20) to use the IMS identifier associated with the NPN identifier of the NPN UE (10) to register the NPN UE (10) in the IMS network by being configured to cause the P-CSCF node (20) to:
include the IMS identifier in a SIP header in at least one of:
the IMS registration request; and/or
a SIP INVITE message.

8. The P-CSCF node (20) of any one of Claims 2-7, wherein the processing circuitry (56) is further configured to cause the P-CSCF node (20) to:
replace, in a SIP INVITE message, at least one field including the NPN identifier with the IMS identifier; and
include in a SIP INVITE message the NPN identifier in an originating identity header.

9. The P-CSCF node (20) of any one of Claims 2-8, wherein the processing circuitry (56) is further configured to cause the P-CSCF node (20) to replace, in a SIP INVITE message, at least one field including the IMS identifier with the NPN identifier.

10. The P-CSCF node (20) of any one of Claims 2-9, wherein the processing circuitry (56) is further configured to cause the P-CSCF node (20) to: as a result of the IMS registration request, associate the IMS identifier and the corresponding NPN identifier of the NPN UE (10) to a wildcarded identity allocated to the NPN domain.

11. A non-public network, NPN, user equipment, UE (10), the NPN UE (10) comprising processing circuitry (48), the processing circuitry (48) configured to cause the NPN UE (10) to
send, to a proxy-call session control function, P-CSCF, node (20), an Internet Protocol, IP, Multimedia Subsystem, IMS, registration request, the IMS registration request including an NPN identifier associated with the NPN UE (10) and the IMS registration request being for an individual IMS registration of the UE (10), wherein the individual IMS registration of the NPN UE (10) is separate from an IMS registration of a wildcarded IMS Public User Identity, IMPU, for an NPN domain; and
as a result of the registration request, receive an Internet Protocol, IP, Multimedia Subsystem, IMS, identifier, from the P-CSCF node (20), the IMS identifier being associated with the NPN identifier .

12. The NPN UE (10) of Claim 11, wherein the processing circuitry (48) is further configured to cause the NPN UE (10) to send a second IMS registration request, the second IMS registration request including the IMS identifier in a session initiation protocol, SIP, header.

13. The NPN UE (10) of any one of Claims 11 and 12, wherein the processing circuitry (48) is further configured to cause the NPN UE (10) to receive a session initiation protocol, SIP, INVITE message, the SIP INVITE message comprising an originating identity header indicating the NPN identifier.

14. A network node (44), the network node (44) comprising processing circuitry (64), the processing circuitry (64) configured to cause the network node (44) to:
receive, from a proxy-call session control function, P-CSCF, node (20), an Internet Protocol, IP, Multimedia Subsystem, IMS, registration request for a non-public network, NPN, user equipment, UE (10), the IMS registration request comprising an IMS identifier, the IMS identifier being associated with an NPN identifier of the NPN UE (10), wherein the IMS registration request is for an individual IMS registration of the NPN UE (10), and the individual IMS registration of the NPN UE (10) is separate from an IMS registration of a wildcarded IMS Public User Identity, IMPU, for an NPN domain; and
store, at the network node (44), the IMS identifier in a registration record associated with the NPN identifier of the NPN UE (10).

15. The network node (44) of Claim 14, wherein the network node (44) is a serving-call session control function, S-CSCF, node.

16. The network node (44) of one of Claims 14 or 15, wherein the IMS identifier is one of an allocated IMS identifier and a manually configured IMS identifier.

## Patentansprüche

1. Verfahren, das in einem Knoten (20) mit Proxy-Rufsitzungssteuerungsfunktion, P-CSCF, implementiert wird, wobei das Verfahren umfasst:
Empfangen (S116) einer Internetprotokoll-,IP-,Multimedia-Subsystem-,IMS-,Registrierungsanforderung von einer Benutzereinrichtung, UE, (10) eines nichtöffentlichen Netzwerks, NPN, wobei die IMS-,Registrierungsanforderung eine mit der NPN-UE (10) assoziierte NPN-Kennung umfasst, wobei die IMS-Registrierungsanforderung für eine individuelle IMS-Registrierung der NPN-UE (10) ist und die individuelle IMS-Registrierung der NPN-UE separat von einer IMS-Registrierung einer mit einem Platzhalter versehenen öffentlichen IMS-Benutzeridentität, IMPU, für eine NPN-Domäne ist; und
Erhalten und Verwenden (S118) einer mit der NPN-Kennung assoziierten IMS-Kennung, um die NPN-UE (10) in einem IMS-Netzwerk zu registrieren, als Ergebnis des Empfangs der IMS-Registrierungsanforderung.

2. Knoten (20) mit Proxy-Rufsitzungssteuerungsfunktion, P-CSCF, wobei der P-CSCF-Knoten (20) Verarbeitungsschaltungsanordnung (56) umfasst, wobei die Verarbeitungsschaltungsanordnung (56) so konfiguriert ist, dass sie den P-CSCF-Knoten (20) veranlasst zum:
Empfangen einer Internetprotokoll-,IP-,Multimedia-Subsystem-,IMS-,Registrierungsanforderung von einer Benutzereinrichtung, UE, (10) eines nichtöffentlichen Netzwerks, NPN, wobei die IMS-,Registrierungsanforderung eine mit der UE (10) assoziierte NPN-Kennung umfasst, wobei die IMS-Registrierungsanforderung für eine individuelle IMS-Registrierung der NPN-UE (10) ist und die individuelle IMS-Registrierung der NPN-UE separat von einer IMS-Registrierung einer mit einem Platzhalter versehenen öffentlichen IMS-Benutzeridentität, IMPU, für eine NPN-Domäne ist; und
Erhalten und Verwenden einer mit der NPN-Kennung assoziierten IMS-Kennung, um die NPN-UE (10) in einem IMS-Netzwerk zu registrieren, als Ergebnis des Empfangs der IMS-Registrierungsanforderung.

3. P-CSCF-Knoten (20) nach Anspruch 2, wobei die Verarbeitungsschaltungsanordnung 56 ferner so konfiguriert ist, dass sie den P-CSCF-Knoten (20) veranlasst, die mit der NPN-Kennung der NPN-UE (10) assoziierte IMS-Kennung zu erhalten, indem sie so konfiguriert ist, dass sie den P-CSCF-Knoten (20) veranlasst zum:
Zuweisen der mit dem NPN assoziierten IMS-Kennung und Assoziieren der zugewiesenen IMS-Kennung mit der NPN-Kennung der NPN-UE (10); oder
Abrufen der IMS-Kennung, die der NPN-Kennung der NPN-UE zugewiesen ist; oder
Erhalten einer manuell konfigurierten IMS-Kennung, die mit der NPN-UE assoziiert ist, und Assoziieren der manuell konfigurierten IMS-Kennung mit der NPN-Kennung der NPN-UE.

4. P-CSCF-Knoten (20) nach einem der Ansprüche 2 bis 3, wobei die Verarbeitungsschaltungsanordnung (56) so konfiguriert ist, dass sie den P-CSCF-Knoten (20) veranlasst, die mit der NPN-Kennung der NPN-UE (10) assoziierte IMS-Kennung zum Registrieren der NPN-UE (10) im IMS-Netzwerk zu verwenden, indem sie so konfiguriert ist, dass sie den P-CSCF-Knoten (20) veranlasst zum:
Aufnehmen der IMS-Kennung in die IMS-Registrierungsanforderung und Weiterleiten der IMS-Registrierungsanforderung an einen Knoten mit bedienender Rufsitzungssteuerungsfunktion, S-CSCF, zur IMS-Registrierung der NPN-UE (10).

5. P-CSCF-Knoten (20) nach einem der Ansprüche 2 bis 4, wobei die IMS
Kennung mindestens eines von Folgenden umfasst:
einen Tel-Uniform-Resource-Indikator, Tel-URI, der eine Telefonnummer umfasst;
einen Sitzungseinleitungs-SIP-,URI, der eine Telefonnummer umfasst;
eine öffentliche IMS-Benutzeridentität, IMPU;
eine von einer zugewiesenen IMS-Kennung und einer manuell konfigurierten IMS-Kennung; und
eine freie individuelle Identität, die aus einer mit einem Platzhalter versehenen Identität der NPN-Domäne zugewiesen ist.

6. P-CSCF-Knoten (20) nach einem der Ansprüche 2 bis 5, wobei die NPN-Kennung der NPN-UE (10) einen Sitzungseinleitungsprotokoll-,SIP-,Uniform-Resource-Indicator, URI, umfasst.

7. P-CSCF-Knoten (20) nach einem der Ansprüche 2 bis 6, wobei die Verarbeitungsschaltungsanordnung (56) so konfiguriert ist, dass sie den P-CSCF-Knoten (20) veranlasst, die mit der NPN-Kennung der NPN-UE (10) assoziierte IMS-Kennung zum Registrieren der NPN-UE (10) im IMS-Netzwerk zu verwenden, indem sie so konfiguriert ist, dass sie den P-CSCF-Knoten (20) veranlasst zum:
Aufnehmen der IMS-Kennung in einen SIP-Header in mindestens einer von:
der IMS-Registrierungsanforderung und/oder
einer SIP-INVITE-Nachricht.

8. P-CSCF-Knoten (20) nach einem der Ansprüche 2 bis 7, wobei die Verarbeitungsschaltungsanordnung (56) ferner so konfiguriert ist, dass sie den CSCF-Knoten (20) veranlasst zum:
Ersetzen mindestens eines Feldes, das die NPN-Kennung umfasst, in der SIP-INVITE-Nachricht durch die IMS-Kennung; und
Aufnehmen der NPN-Kennung in einen Ursprungsidentitätsheader in einer SIP-INVITE-Nachricht.

9. P-CSCF-Knoten (20) nach einem der Ansprüche 2 bis 8, wobei die Verarbeitungsschaltungsanordnung (56) ferner so konfiguriert ist, dass sie den CSCF-Knoten (20) veranlasst, in einer SIP-INVITE-Nachricht mindestens ein Feld, das die IMS-Kennung umfasst, durch die NPN-Kennung zu ersetzen.

10. P-CSCF-Knoten (20) nach einem der Ansprüche 2 bis 9, wobei die Verarbeitungsschaltungsanordnung (56) so konfiguriert ist, dass sie den P-CSCF-Knoten (20) veranlasst zum: Assoziieren der IMS-Kennung und der entsprechenden NPN-Kennung der NPN-UE (10) mit einer Identität, die mit einem Platzhalter versehen und der NPN-Domäne zugewiesen ist, als Ergebnis der IMS-Registrierungsanforderung.

11. Benutzereinrichtung, UE, (10) eines nichtöffentlichen Netzwerks, NPN, wobei die NPN-UE (10) Verarbeitungsschaltungsanordnung (48) umfasst, wobei die Verarbeitungsschaltungsanordnung (48) so konfiguriert ist, dass sie die NPN-UE (10) veranlasst zum:
Senden einer Internetprotokoll-,IP-,Multimedia-Subsystem-,IMS-,Registrierungsanforderung an einen Knoten (20) mit Proxy-Rufsitzungssteuerungsfunktion, P-CSCF, wobei die IMS-,Registrierungsanforderung eine mit der UE (10) assoziierte NPN-Kennung umfasst und die IMS-Registrierungsanforderung für eine individuelle IMS-Registrierung der UE (10) ist, wobei die individuelle IMS-Registrierung der NPN-UE (10) separat von einer IMS-Registrierung einer mit einem Platzhalter versehenen öffentlichen IMS-Benutzeridentität, IMPU, für eine NPN-Domäne ist; und
Empfangen einer Internetprotokoll-,IP-,Multimedia-Subsystem-,IMS-,Kennung vom P-CSCF-Knoten (20) als Ergebnis der Registrierungsanforderung, wobei die IMS-Kennung mit der NPN-Kennung assoziiert ist.

12. NPN-UE (10) nach Anspruch 11, wobei die Verarbeitungsschaltungsanordnung (48) ferner so konfiguriert ist, dass sie die NPN-UE (10) zum Senden einer zweiten IMS-Registrierungsanforderung veranlasst, wobei die zweite IMS-Registrierungsanforderung die IMS-Kennung in einem Sitzungseinleitungsprotokoll-,SIP-,Header umfasst.

13. NPN-UE (10) nach einem der Ansprüche 11 und 12, wobei die Verarbeitungsschaltungsanordnung (48) ferner so konfiguriert ist, dass sie die NPN-UE (10) veranlasst, eine Sitzungseinleitungsprotokoll-,SIP-,INVITE-Nachricht zu empfangen, wobei die SIP-INVITE-Nachricht einen Ursprungsidentitätsheader umfasst, der die NPN-Kennung angibt.

14. Netzwerkknoten (44), wobei der Netzwerkknoten (44) Verarbeitungsschaltungsanordnung (64) umfasst, wobei die Verarbeitungsschaltungsanordnung (64) so konfiguriert ist, dass sie den Netzwerkknoten (44) veranlasst zum:
Empfangen einer Internetprotokoll-,IP-,Multimedia-Subsystem-,IMS-,Registrierungsanforderung für eine Benutzereinrichtung, UE, (10) eines nichtöffentlichen Netzwerks, NPN, von einem Knoten (20) mit Proxy-Rufsitzungssteuerungsfunktion, P-CSCF, wobei die IMS-,Registrierungsanforderung eine IMS-Kennung umfasst, die IMS-Kennung mit einer NPN-Kennung der NPN-UE (10) assoziiert ist, wobei die IMS-Registrierungsanforderung für eine individuelle IMS-Registrierung der NPN-UE (10) ist und die individuelle IMS-Registrierung der NPN-UE (10) separat von einer IMS-Registrierung einer mit einem Platzhalter versehenen öffentlichen IMS-Benutzeridentität, IMPU, für eine NPN-Domäne ist; und
Speichern der IMS-Kennung in einem Registrierungsdatensatz, der mit der NPN-Kennung der NPN-UE (10) assoziiert ist, am Netzwerkknoten (44).

15. Netzwerkknoten (44) nach Anspruch 14, wobei der Netzwerkknoten (44) ein Knoten mit bedienender Rufsitzungssteuerungsfunktion, S-CSCF, ist.

16. Netzwerkknoten (44) nach einem der Ansprüche 14 oder 15, wobei die IMS-Kennung eine von einer zugewiesenen IMS-Kennung und einer manuell konfigurierten IMS-Kennung ist.

## Revendications

1. Procédé mis en oeuvre dans un noeud de fonction de commande de session d'appel proxy, P-CSCF, (20), le procédé comprenant :
la réception (S116), depuis un équipement utilisateur, UE, de réseau non public, NPN, (10), d'une demande d'enregistrement de sous-système multimédia de protocole Internet, IP, IMS, la demande d'enregistrement IMS incluant un identifiant NPN associé à l'UE NPN (10), dans lequel la demande d'enregistrement IMS est pour un enregistrement IMS individuel de l'UE NPN (10) et l'enregistrement IMS individuel de l'UE NPN est distinct d'un enregistrement IMS d'une identité d'utilisateur publique IMS, IMPU, de remplacement pour un domaine NPN ; et
à la suite de la réception de la demande d'enregistrement IMS, l'obtention et l'utilisation (S118) d'un identifiant IMS associé à l'identifiant NPN pour enregistrer l'UE NPN (10) dans un réseau IMS.

2. Noeud de fonction de commande de session d'appel proxy, P-CSCF, (20), le noeud P-CSCF (20) comprenant une circuiterie de traitement (56), la circuiterie de traitement (56) étant configurée pour amener le noeud P-CSCF (20) à :
recevoir, depuis un équipement utilisateur, UE, de réseau non public, NPN, (10), une demande d'enregistrement de sous-système multimédia de protocole Internet, IP, IMS, la demande d'enregistrement IMS incluant un identifiant NPN associé à l'UE NPN (10), dans lequel la demande d'enregistrement IMS est pour un enregistrement IMS individuel de l'UE NPN (10) et l'enregistrement IMS individuel de l'UE NPN est distinct d'un enregistrement IMS d'une identité d'utilisateur publique IMS, IMPU, de remplacement pour un domaine NPN ; et
à la suite de la réception de la demande d'enregistrement IMS, obtenir et utiliser un identifiant IMS associé à l'identifiant NPN pour enregistrer l'UE NPN (10) dans un réseau IMS.

3. Noeud P-CSCF (20) selon la revendication 2, dans lequel la circuiterie de traitement (56) est en outre configurée pour amener le noeud P-CSCF (20) à obtenir l'identifiant IMS associé à l'identifiant NPN de l'UE NPN (10) en étant configurée pour amener le noeud P-CSCF (20) à :
allouer l'identifiant IMS associé à l'identifiant NPN et associer l'identifiant IMS alloué à l'identifiant NPN de l'UE NPN (10) ; ou
récupérer l'identifiant IMS qui est alloué à l'identifiant NPN de l'UE NPN ; ou
obtenir un identifiant IMS configuré manuellement associé à l'UE NPN et associer l'identifiant IMS configuré manuellement à l'identifiant NPN de l'UE NPN.

4. Noeud P-CSCF (20) selon la revendication 2 ou 3, dans lequel la circuiterie de traitement (56) est configurée pour amener le noeud P-CSCF (20) à utiliser l'identifiant IMS associé à l'identifiant NPN de l'UE NPN (10) pour enregistrer l'UE NPN (10) dans le réseau IMS en étant configuré pour amener le noeud P-CSCF (20) à :
inclure l'identifiant IMS dans la demande d'enregistrement IMS et transférer la demande d'enregistrement IMS à un noeud de fonction de commande de session d'appel de desserte, S-CSCF, pour un enregistrement IMS de l'UE NPN (10).

5. Noeud P-CSCF (20) selon l'une quelconque des revendications 2 à 4, dans lequel l'identifiant IMS comprend au moins l'un parmi :
un indicateur de ressource uniforme Tel, Tel-URI, comprenant un numéro de téléphone ;
un URI de protocole d'initiation de session, SIP, comprenant un numéro de téléphone ;
une identité d'utilisateur publique IMS, IMPU ;
l'un parmi un identifiant IMS alloué et un identifiant IMS configuré manuellement ; et
une identité individuelle libre allouée à partir d'une identité de remplacement du domaine NPN.

6. Noeud P-CSCF (20) selon l'une quelconque des revendications 2 à 5, dans lequel l'identifiant NPN de l'UE NPN (10) comprend un indicateur de ressource uniforme, URI, de protocole d'initiation de session, SIP.

7. Noeud P-CSCF (20) selon l'une quelconque des revendications 2 à 6, dans lequel la circuiterie de traitement (56) est configurée pour amener le noeud P-CSCF (20) à utiliser l'identifiant IMS associé à l'identifiant NPN de l'UE NPN (10) pour enregistrer l'UE NPN (10) dans le réseau IMS en étant configuré pour amener le noeud P-CSCF (20) à :
inclure l'identifiant IMS dans un en-tête SIP d'au moins l'un parmi :
la demande d'enregistrement IMS ; et/ou
un message SIP INVITE.

8. Noeud P-CSCF (20) selon l'une quelconque des revendications 2 à 7, dans lequel la circuiterie de traitement (56) est en outre configurée pour amener le noeud P-CSCF (20) à :
remplacer, dans un message SIP INVITE, au moins un champ incluant l'identifiant NPN par l'identifiant IMS ; et
inclure dans un message SIP INVITE l'identifiant NPN dans un en-tête d'identité d'origine.

9. Noeud P-CSCF (20) selon l'une quelconque des revendications 2 à 8, dans lequel la circuiterie de traitement (56) est en outre configurée pour amener le noeud P-CSCF (20) à remplacer, dans un message SIP INVITE, au moins un champ incluant l'identifiant IMS par l'identifiant NPN.

10. Noeud P-CSCF (20) selon l'une quelconque des revendications 2 à 9, dans lequel la circuiterie de traitement (56) est en outre configurée pour amener le noeud P-CSCF (20) à : à la suite de la demande d'enregistrement IMS, associer l'identifiant IMS et l'identifiant NPN correspondant de l'UE NPN (10) à une identité de remplacement allouée au domaine NPN.

11. Equipement utilisateur, UE, de réseau non public, NPN, (10), l'UE NPN (10) comprenant une circuiterie de traitement (48), la circuiterie de traitement (48) étant configurée pour amener l'UE NPN (10) à :
envoyer, à un noeud de fonction de commande de session d'appel proxy, P-CSCF, (20), une demande d'enregistrement de sous-système multimédia de protocole Internet, IP, IMS, la demande d'enregistrement IMS incluant un identifiant NPN associé à l'UE NPN (10) et la demande d'enregistrement IMS étant pour un enregistrement IMS individuel de l'UE NPN (10), dans lequel l'enregistrement IMS individuel de l'UE NPN (10) est distinct d'un enregistrement IMS d'une identité d'utilisateur publique IMS, IMPU, de remplacement pour un domaine NPN ; et
à la suite de la demande d'enregistrement, recevoir un identifiant de sous-système multimédia de protocole Internet, IP, IMS, à partir du noeud P-CSCF (20), l'identifiant IMS étant associé à l'identifiant NPN.

12. UE NPN (10) selon la revendication 11, dans lequel la circuiterie de traitement (48) est en outre configurée pour amener l'UE NPN (10) à envoyer une deuxième demande d'enregistrement IMS, la deuxième demande d'enregistrement IMS incluant l'identifiant IMS dans un en-tête de protocole d'initiation de session, SIP.

13. UE NPN (10) selon la revendication 11 ou 12, dans lequel la circuiterie de traitement (48) est en outre configurée pour amener l'UE NPN (10) à recevoir un message de protocole d'initiation de session, SIP, INVITE, le message SIP INVITE comprenant un en-tête d'identité d'origine indiquant l'identifiant NPN.

14. Noeud de réseau (44), le noeud de réseau (44) comprenant une circuiterie de traitement (64), la circuiterie de traitement (64) étant configurée pour amener le noeud de réseau (44) à :
recevoir, depuis un noeud de fonction de commande de session d'appel proxy, P-CSCF, (20), une demande d'enregistrement de sous-système multimédia de protocole Internet, IP, IMS, pour un équipement utilisateur, UE, de réseau non public, NPN, (10), la demande d'enregistrement IMS comprenant un identifiant IMS, l'identifiant IMS étant associé à un identifiant NPN de l'UE NPN (10), dans lequel la demande d'enregistrement IMS est pour un enregistrement IMS individuel de l'UE NPN (10) et l'enregistrement IMS individuel de l'UE NPN (10) est distinct d'un enregistrement IMS d'une identité d'utilisateur publique IMS, IMPU, de remplacement pour un domaine NPN ; et
stocker, au niveau du noeud de réseau (44), l'identifiant IMS dans un dossier d'enregistrement associé à l'identifiant NPN de l'UE NPN (10).

15. Noeud de réseau (44) selon la revendication 14, dans lequel le noeud de réseau (44) est un noeud de fonction de commande de session d'appel de desserte, S-CSCF.

16. Noeud de réseau (44) selon la revendication 14 ou 15, dans lequel l'identifiant IMS est l'un parmi un identifiant IMS alloué et un identifiant IMS configuré manuellement.
